Europäisches Patentamt

European Patent Office

Office européen des brevets

(11) Publication number: **0 488 352 A2**

## EUROPEAN PATENT APPLICATION

(21) Application number: **91120490.7**

(51) Int. Cl.⁵: **G01N 27/12**

(22) Date of filing: **29.11.91**

(30) Priority: **30.11.90 JP 330560/90**
**12.07.91 JP 172644/91**
**06.08.91 JP 196829/91**

(43) Date of publication of application:
**03.06.92 Bulletin 92/23**

(84) Designated Contracting States:
**BE DE FR GB NL SE**

(71) Applicant: **MITSUI MINING COMPANY, LIMITED**
**1-1, Nihonbashi-Muromachi 2-chome**
**Chuo-ku Tokyo 103(JP)**

(72) Inventor: **Yashima, Isamu, c/o Mitsui Mining**
**Co., Ltd.**
**Central Research & Development Lab., 1,**
**Koumachi**
**Tochig-shi, Tochigi-ken(JP)**
Inventor: **Kitahara, Nobuyuki, c/o Mitsui**
**Mining Co., Ltd.**
**Central Research & Development Lab., 1,**
**Koumachi**
**Tochig-shi, Tochigi-ken(JP)**
Inventor: **Notoya, Masayuki, c/o Mitsui Mining**
**Co., Ltd.**
**Central Research & Development Lab., 1,**
**Koumachi**
**Tochig-shi, Tochigi-ken(JP)**
Inventor: **Sato, Hiroshi, c/o Mitsui Mining Co.,**
**Ltd.**
**Central Research & Development Lab., 1,**
**Koumachi**
**Tochig-shi, Tochigi-ken(JP)**
Inventor: **Tatsumoto, Katsunobu, c/o Mitsui**
**Mining Co., Ltd.**
**Central Research & Development Lab., 1,**
**Koumachi**
**Tochig-shi, Tochigi-ken(JP)**

(74) Representative: **Hering, Hartmut, Dipl.-Ing. et**
**al**
**Patentanwälte Berendt, Leyh & Hering**
**Innere-Wiener-Strasse 20**
**W-8000 München 80(DE)**

(54) **Semiconductor gas sensor.**

(57) The invention provides a semiconductor gas sensor with a desired number of electrodes formed on a surface of a semiconductor. A diamond semiconductor is used as the semiconductor.

# F I g. 1(a)

# F I g. 1(b)

Background of the Invention

1. Field of the Invention

This invention relates to a semiconductor gas sensor using a diamond semiconductor at a gas-detecting portion, and more specifically to a semiconductor gas sensor capable of detecting a semiconductor-fabricating gas, such as silane, arsine or phosphine, which can be only nominally detected by conventional semiconductor gas sensors.

2. Description of the Related Art

Gas sensors are widely used for the detection of various gases ranging from town gas for general domestic use to special gases produced in semiconductor fabrication factories. These gas sensors include semiconductor gas sensors, each which uses a semiconductor at a gas-detecting portion so that a particular gas can be detected by measuring changes in an electrical characteristic or the like occurring in a surface of the semiconductor upon contact of the particular gas to the surface. These semiconductor gas sensors are meritorious in that they permit a size reduction and, moreover, the detection of gas of relatively low concentration. They have therefore been researched widely and put into practical use. Semiconductor materials found to be effective for the gas-detecting portion include: (1) intrinsic oxide semiconductors, which are oxides such as tin oxide, zinc oxide and vanadium oxide and exhibit semiconductor characteristics without doping because the valences of their metal cations change, (2) oxide semiconductors showing no intrinsic semiconductor characteristics, which are extrinsic oxide semiconductors with interstitial atoms, vacancies, substituted atoms or a combination of such defects formed as a result of the addition of a dopant so that electrons or holes are produced to compensate the ionic charge and semiconductor characteristics are exhibited, and (3) non-oxide semiconductors typified by silicon, gallium arsenide and vanadium nitride, which exhibit semiconductor characteristics when doped.

The semiconductors (1) and (2) are generally produced by the steps of forming and sintering oxide powder and are often used as polycrystalline solids. A polycrystalline solid, however, does not permit easy application of any photolithographic or etching technique, leading to the problems that the today's desires for size reduction, circuit integration and hybridization of a sensor are difficult to fulfill.

Conventional semiconductor gas sensors are each fabricated by using an oxide as a semiconductor material and subjecting it to heat treatment to convert it into an oxide of a non-stoichiometric composition and hence to impact semiconductor characteristics. When a target gas is adsorbed on the semiconductor, the band structure in the semiconductor varies, resulting in a variation in electrical characteristics such as electric resistance or electric capacitance. These sensors detect the target gas based on the variation in the electric characteristic. These semiconductor gas sensors, however, involve problems in reproducibility and reliability. For example, oxide semiconductors such as $V_2O_5$ and $TiO_2$ are not semiconductors inherently. They are hence heat treated at about 500°C or so in a vacuum or in hydrogen, whereby they are converted to oxides of a non-stoichiometric composition and are hence imparted with semiconductor characteristics. Accordingly, they are theoretically sensitive to the partial pressure of oxygen and their electric resistance or electric capacitance varies not only by the existence of a gas to be detected but also by changes in the oxygen partial pressure. Their reliability as gas sensors therefore is accompanied by a problem when employed in an environment where oxygen is present and its partial pressure varies.

On the other hand, the semiconductors (3) rather easily permit size reduction, circuit integration and hybridization by the use of a semiconductor process. The semiconductors (3), however, are compounds relatively lacking in resistance to oxidation or reduction, resulting in the problem that they cannot be used in a strongly oxidative or reductive atmosphere or in a dusty or corrosive atmosphere. Moreover, their band gaps are narrow so that, when heated, they are electrically saturated and no longer show semiconductor characteristics, leading to the problem that they cannot be used under heating. Heating is therefore not feasible to improve the sensitivity of such sensors, leading to the problem that they cannot be used in a high-temperature atmosphere.

The semiconductor characteristics of a sensor, which has been fabricated by typically using Si as a substrate and doping it by ion bombardment or vapor phase epitaxy to convert it into a semiconductor, are theoretically unaffected by a variation in the partial pressure of oxygen because the Si so doped is not an oxide semiconductor. It is, however, theoretically difficult to detect a target gas unless the target gas directly contacts the Si semiconductor. Where the target gas is brought into direct contact with the Si semiconductor as described above, the Si semiconductor is gradually oxidized into $SiO_x$ in an oxygen-bearing atmosphere as the chemical reaction between the Si semiconductor and oxygen readily takes place

3

even at room temperature. As a result, the Si semiconductor deteriorates progressively, thereby making it impossible to obtain long-term stable reproducibility for any gas. Where the Si semiconductor is used in a heated state, a chemical reaction takes place at the interface of each electrode and the Si semiconductor so that a silicide is gradually formed. A problem therefore arises in long-term stability. Similarly, the Si semiconductor is also prone to deterioration in an atmosphere such as a halogen gas. In addition, the band gap of the Si semiconductor is as narrow as 1.1 eV so that the Si semiconductor is sensitive to light, especially in the case of an n-type Si or pn-junction Si gas sensor. Shielding of light is therefore indispensable to avoid variations in electrical resistance under light, which is called "photoconductivity". However this results in the problem that the sensor structure becomes complex.

Summary of the Invention

With a view to overcoming the above problems, the present inventors have conducted extensive research into semiconductor sensor materials. As a result, it was found that use of a diamond semiconductor as a gas sensor material makes it possible to fabricate a high-performance sensor capable of detecting under a wide variety of conditions various gases, such as diborane, phosphine and arsine, which are difficult to detect with conventional semiconductor sensors.

However, it was then found that, even when such a diamond semiconductor is used as a gas sensor material, sensor characteristics are adversely and unfavorably affected should the diamond semiconductor so used contain an impurity other than a dopant. When a diamond semiconductor is synthesized, especially by vapor phase epitaxy, the resulting diamond semiconductor may contain, as an impurity, carbon atoms having a double bond (double-bonded carbon atoms) such as polycondensed aromatic rings (conjugated ring systems) and/or linear conjugated systems. These double-bonded carbon substance electrically behave like metal and reduce the semiconductor characteristics of diamond, thereby causing problems in using the diamond semiconductor as a gas sensor, such as reduced sensitivity and reproducibility and drifted zero base line and span. Further double-bonded carbon substance not forming such a diamond easily react with oxygen in air, leading to problems whereby stable sensor characteristics cannot be obtained especially when used in an atmosphere above 100°C.

The present inventors have proceeded with a further research to overcome such problems. As a result, it has been found that use of a diamond semiconductor free of double-bonded carbon substance as a gas sensor material, and employment of a particular metal or alloy as an electrode material make it possible to fabricate a sensor capable of detecting under a wide variety of conditions gases barely detectable by conventional gas sensors, led by dopant gases such as silane, phosphine, arsine and diborane and including halogen gases such as hydrogen fluoride gas, chlorine gas and hydrogen chloride gas, leading to the completion of the present invention.

An object of the present invention is therefore to overcome the above-described problems of the conventional art and to provide a semiconductor gas sensor which permits size reduction and circuit integration and is usable over a wide range of temperatures even in an oxidative or reductive atmosphere.

To achieve the object described above, the present invention provides a semiconductor gas sensor with a certain number of electrodes formed on a surface of a semiconductor, in which the semiconductor is a diamond semiconductor. The diamond semiconductor preferably is a thin diamond layer formed by vapor-phase epitaxy. Desirably, the diamond semiconductor is a monocrystalline or polycrystalline diamond semiconductor free of double-bonded carbon substance. The electrodes preferably are made of a metal selected from the first metal group consisting of Pt, Pd, Ir, Ru, Rh, Re, Ag, Os and Au, an alloy of at least two metals selected from the first metal group or an alloy of at least one metal selected from the first metal group and at least one metal selected from the second metal group consisting of Cu, P, Co, Ni and Ce and, as electrodes employed in a gas sensor, may desirably have an ohmic characteristic as an electrical characteristic.

The semiconductor gas sensor according to the present invention is usable at temperatures in a range as wide as 20-900°C even in a severe atmosphere such as an oxidative, reductive or corrosive atmosphere. It is a high-sensitivity and high-reliability gas sensor applicable to a wide variety of gases barely detectable by conventional semiconductor gas sensors, led by dopant gases such as silane, arsine and phosphine and including $CF_4$ gas. The semiconductor gas sensor of this invention therefore has an extremely great industrial value.

Brief Description of the Drawings

FIG. 1(a) is a schematic side view of a semiconductor gas sensor according to a first embodiment of the present invention;

FIG. 1(b) is a schematic plan view of the semiconductor gas sensor of FIG. 1(a);

FIG. 2 is a schematic side view of a semiconductor gas sensor according to a second embodiment of the present invention;

FIG. 3 is a Raman spectrum of a diamond semiconductor useful in the practice of this invention;

FIG. 4 is a Raman spectrum showing at 1,333 cm$^{-1}$ peaks of a diamond semiconductor and diamond substrate useful in the practice of the present invention;

FIG. 5 is a schematic side view of a semiconductor gas sensor according to a third embodiment of the present invention;

FIG. 6 is a Raman spectrum of a polycrystalline diamond semiconductor useful in the practice of the present invention; and

FIG. 7 is a circuit diagram illustrating one example of a measuring instrument which can be connected to a semiconductor gas sensor of this invention.

## Detailed Description of the Invention

The present invention will hereinafter be described in detail with reference to the drawings.

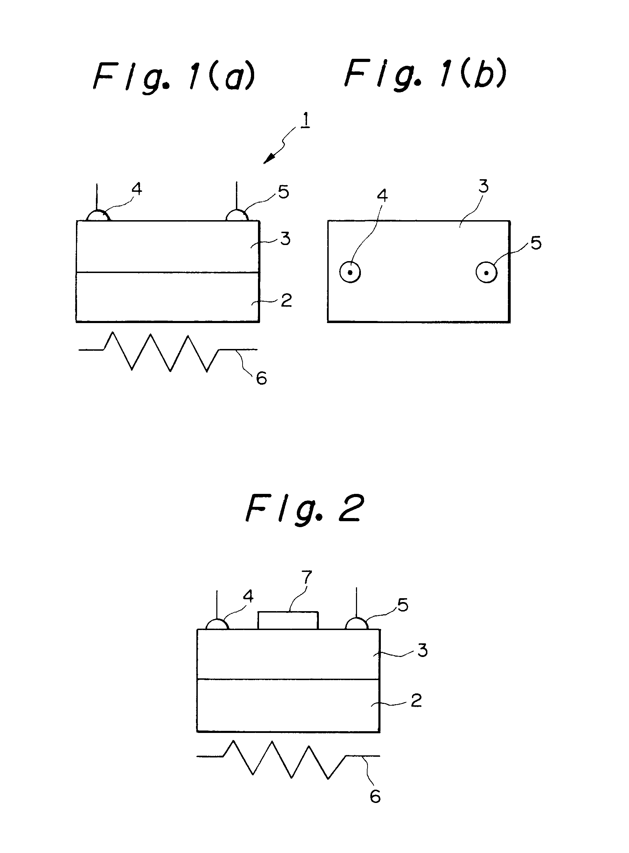

FIGS. 1(a) and 1(b) illustrate the semiconductor gas sensor according to the first embodiment of this invention, in which the sensor is generally indicated at numeral 1. The sensor 1 comprises a diamond semiconductor layer 3 stacked on an upper surface of a substrate 2 and a certain number of (two in this embodiment) electrodes 4,5 formed on an upper surface of the semiconductor layer 3. The diamond semiconductor layer 3 is made of a diamond which has been converted to a semiconductor by adding a dopant. In addition, a heating means 6 for heating the sensor 1 such as a heater may also be provided underneath the sensor 1 as needed.

Usable as a material for the diamond semiconductor layer 3 employed in the gas sensor 1 is a diamond which has been converted into a semiconductor by doping with a dopant such as B, P, Na or Li. A B-doped diamond is particularly preferred. It is preferable that the dopant concentration be controlled within the range of from 5 ppm to 500 ppm (by molar ratio). Although B-doped diamond crystal bulk mined as blue diamond in a small quantity or synthesized at high temperature and high pressure may be used as such a diamond semiconductor, it is accompanied by problems in price and the controllability of B content.

The inclusion of double-bonded carbon substance such as polycondensed aromatic rings and/or linear conjugated systems as an impurity in the diamond semiconductor leads to problems such as electric noise and poor long-term stability. As the diamond semiconductor, a diamond on which the Raman spectrum of any one of the above-mentioned impurities is not observed when analyzed by Raman spectroscopy (resolution: 0.5 cm$^{-1}$) is therefore used to avoid such problems.

Such a diamond can be produced, for example, by adding a hydrogen plasma etching step to the fabrication process. In the course of a deposit step by CVD or the like in which diamond is allowed to grow (deposit), carbon atoms not formed into diamond can be eliminated by hydrogen plasma etching so that diamond alone is allowed to deposit. By repeating the deposit of diamond and the hydrogen plasma etching, a diamond semiconductor on which no impurity is observed can be formed on a substrate. As an alternative, hydrogen plasma etching can also be conducted after a diamond semiconductor has been formed on the substrate. A diamond semiconductor on which no impurity is observed can also be formed in this manner. By using the diamond formed as described above, on which no impurity is observed, as a semiconductor, the sensor can output stable signals, is less susceptible to electric noise and can retain excellent long-term stability.

As has been described above, it is preferred from the standpoint of the stability and the like of a sensor to use a diamond semiconductor on which no impurity is observed by Raman spectroscopy. This, however, does not exclude use of impurity-containing diamond semiconductors because diamond semiconductors still have practical utility as sensors even if impurities are contained.

A diamond semiconductor layer as thin as possible is preferable from the standpoint of size reduction of a gas sensor. Any unduly small thickness, however, lowers the reliability as a sensor and tends to produce variations in characteristics. It is therefore preferable to control the thickness of the diamond semiconductor layer within the range of 0.1-10 $\mu$m.

Even if a diamond semiconductor layer is thinner than 0.1 $\mu$m, the diamond semiconductor layer still has sufficient sensitivity to gases. It is therefore still possible for it to function as a gas sensor provided that a circuit or the like to compensate for variations in the resistance of the device is built in. Use of a diamond semiconductor layer thinner than 0.1 $\mu$m is hence not excluded. Such a thin-film diamond semiconductor can be prepared by allowing a diamond semiconductor to grow on a crystalline substrate, for example, by vapor-phase epitaxy. However, a thickness exceeding 10μm is undesirable as it results in reduced productivity.

As the substrate 2 for permitting the growth of the diamond semiconductor layer 3, no particular limitation is imposed insofar as diamond is allowed to undergo vapor-phase growth. Diamond, silicon, alumina, magnesia, calcium fluoride, aluminum nitride and the like can be used. Of these, a monocrystalline diamond substrate is particularly preferred as it facilitates the formation of a semiconductor layer having excellent characteristics. As an illustration of the preferred process for the formation of the B-doped diamond semiconductor layer 3 there is one in which a thin film of diamond is allowed to grow on a diamond substrate which has been produced by a high-temperature and highpressure process, in accordance with plasma CVD while using methane, hydrogen and diborane gas as raw materials.

The electrodes 4,5 for measuring a variation in electric resistance as an output are formed on the diamond semiconductor layer 3 obtained as described above. The electrodes 4,5 can be formed by a known method, for example, by the vacuum deposition of an electrode material. A conductive metal is preferred as the electrode material although no particular limit is imposed thereon. To increase the sensitivity of measurement, it is preferable to form one of the electrodes as a Schottky electrode and the other as an Ohmic electrode. For the Schottky electrode, it is necessary to use a material which exhibits rectification characteristics at an interface of its contact with diamond. Tungsten, aluminum and titanium are particularly preferred. On the other hand, no particular limitation is imposed on the material for the Ohmic electrode as long as a conductive material is used. To permit use of the sensor in a severe atmosphere such as an oxidative or corrosive atmosphere, it is preferred to use gold, platinum or the like. To connect these electrodes to external output terminals through which signals obtained from the electrodes are transmitted to the outside, it is only necessary to connect them by solder or similar bonding to conductive wires such as copper.

Further, conversion of a surface of the diamond semiconductor layer into a porous structure by the below-described method or the like is preferred because the gas-adsorbing ability and, hence, the performance of the sensor can be improved.

When a gas to be detected contacts the sensor, the electrical characteristic of the semiconductor layer between both the electrodes varies. The concentration of the target gas can be measured by detecting the degree of the variation as a change in electrical conductivity or electrical capacitance by a suitable means. Although details of the operation principle of the sensor have not been elucidated fully, an atmosphere gas is adsorbed on the surface of the diamond semiconductor and its adsorption is maintained in an equilibrated state. When the gas to be detected, especially, a gas having reactivity with the adsorbed gas contacts, the equilibrated state varies so that the electrical characteristics of the semiconductor appears to change.

Although the semiconductor gas sensor according to the present invention can be used at low temperatures, the reaction rate of a gas becomes faster and the response speed of the sensor becomes quicker as the use temperature becomes higher. It is therefore preferred to dispose a heating means inside the sensor so that measurement can be conducted at a suitable temperature conforming with given measurement conditions. The measurement temperature may preferably range from 60°C to 400°C.

The above semiconductor gas sensor uses the diamond semiconductor as a gas-detecting semiconductor, so that the semiconductor gas sensor is suitable for the detection of a gas such as hydrogen, diborane, arsine or phosphine - which has reactivity with compounds having the tendency of being chemically adsorbed on a diamond surface with ease, such as hydrogen, oxygen, carbon, chlorine, iodine and fluorine, and can change the amount of a compound adsorbed on the diamond semiconductor - in an atmosphere containing such compounds. Further, diamond is extremely stable from the chemical standpoint and is not attacked by ordinary acids or alkalies. It has a band gap as great as 5.4 eV and, when doped with B, P, Na, Li or the like, shows good semiconductor characteristics. Its semiconductor characteristics are not impaired even in an oxidative atmosphere at a temperature ranging from 20°C to 200°C. The gas sensor according to this invention, which uses the diamond semiconductor, can be used within a wide temperature range even in an oxidative and corrosive atmosphere, whereby it has great industrial utility.

The present invention can bring about other advantageous effects by selecting the material of the electrodes 4,5. Depending on the kind of the metal employed as an electrode material, the gas sensor of this invention can show different response characteristics (selectivity) to different target gases and, further, can have the ohmic characteristic that the current is proportionate to the voltage applied.

Although the gas detection mechanism, especially, reasons for the different response characteristics to different gases have not been fully elucidated, the following reasoning may be made. Adsorption of a gas probably takes place at the interface between the diamond semiconductor layer and the electrode material. As a consequence, a change appears to occur in the pattern of bending of the energy band of the diamond semiconductor so that the electrical equilibrium after the adsorption of a gas changes from that before the adsorption of the gas (i.e., the electrical resistance and electrical capacitance change). This probably leads to a change in the resistance between the electrodes. By detecting the extent of the change, it appears possible to detect and measure the particular gas corresponding to the kind of the electrode material used.

There are also gas sensors having the Schottky characteristic, which detect or measure a target gas by relying upon the phenomenon that a current suddenly flows when the gas contacts the gas sensors while the gas sensors are being applied with a voltage at least equal to a specific voltage determined by the target gas. These gas sensors, however, cannot detect or measure a desired gas if the voltage applied to the sensors is lower than the specific voltage required for the detection of the gas. Different from these gas sensors, the sensor element of the present invention has been found to have, instead of the Schottky characteristic as described above, the ohmic characteristic that the current linearly varies in relation to the voltage applied. This means that the sensor element of the present invention has sensitivity to a gas at any application voltage without the need for choosing any specific voltage as in the Schottky system. The gas sensor of this invention can therefore measure gas concentrations in such a low concentration range that the Schottky system is unable to measure, and, further, facilitates the design of a circuit.

In this case, the basic outline structure of the gas sensor is fundamentally the same as the structure described above. On the substrate employed to permit the growth of the diamond semiconductor layer, a diamond semiconductor layer added with a suitable dopant is formed, for example. A pair of electrodes are provided at a suitable interval therebetween on a surface of the diamond semiconductor layer. A heater may also be provided underneath the substrate as needed. Further, a sensor having several sensor units arranged on a single substrate to permit detection or measurement of a like number of different kinds of gases can be fabricated by forming at suitable intervals a like number of diamond semiconductor layers of the same type as that described above and then providing, on each of the diamond semiconductor layers, electrodes of a material most suited for the detection of the target gas to be detected or measured. As is apparent from the foregoing, the present invention can make use of the phenomenon that the response characteristic of the sensor to each gas differs depending on the kind of a metal to be used as an electrode material. Further, a substrate of a desired size can be used so that no limitation is imposed on the number of sensor units to be formed on the substrate. On each sensor unit, electrodes can be formed, as many as needed, at desired intervals. In addition, the kind of a detected gas can be determined by assembling a suitable logic circuit or the like in a circuit which processes outputs from plural sensor units having different response characteristics.

No particular limitation is imposed on the material of the substrate to be used, insofar as a diamond semiconductor is allowed to grow on the substrate with good bonding therebetween and the substrate does not react with hydrogen plasma. Examples include diamond, silicon nitride, silicon carbide, tungsten carbide, SIALON. highly-oriented pyrolytic graphite, and amorphous carbon.

To improve the response speed as a sensor, an external heater may be provided to heat the element. Provision of a heater is however not essential as the element can be self-heated by increasing the application voltage to the element.

The electrode material can be a metal selected from a metal group (Group A) consisting of Pt, Pd, Ir, Ru, Rh, Re, Ag, Os and Au; an alloy of at least two metals selected from Group A; or an alloy of at least one metal selected from Group A and at least one metal selected from another metal group (Group B) consisting of Cu, P, Co, Ni and Ce. As a specific example of such alloys includes Au-Pd (4:1) alloy or the like. The response characteristics of these electrode materials vary depending on the gas, so that a suitable electrode material may be chosen in view of the gas to be detected or to be measured in content.

To illustrate the varying levels of sensitivity of an electrode material to a range of gases, an Au electrode is most sensitive to $PH_3$ gas; almost as sensitive to $SiH_4$, $H_2S$ and $AsH_3$ gases; and somewhat less sensitive to CO gas.

Such an order in sensitivity can be expressed using signs of inequality, like $PH_3 > SiH_4, H_2S, AsH_3 > CO$ for Au electrodes. Further, the sensitivities to different kinds of gases when Pt or Au-Pd alloy is used as an electrode material can be expressed as follows:

Pt electrodes:        $H_2S > CO, SiH_4 > PH_3, AsH_3$
Au-Pd electrodes:    $H_2S > CO > AsH_3 > PH_3 > SiH_4$
Pd electrodes:        $PH_3 > SiH_4 > H_2S > AsH_3$
Ir electrodes:         $H_2S > CO > SiH_4$
Ag electrodes:       $H_2S \gg PH_3 > SiH_4 > AsH_3$

When it is desired, for example, to detect diborane gas or to measure its content, palladium (Pd) may be used as an electrode material.

The diamond semiconductor gas sensor of the present invention can detect low-concentration gases such as silane, phosphine, arsine, diborane, CO, $CO_2$, $O_2$, $H_2S$, $SO_2$, $NH_3$, propylene, $C_2H_4$, 1-butene, 1,3-

butadiene, acetylene, HCl, HF and $Cl_2$, or can measure their contents. These compounds change the band structure of the diamond semiconductor.

Further, the detection of these compounds can be conducted in the atmosphere of a gas susceptible to adsorption on the interface between the electrode material and the diamond semiconductor - such as hydrogen gas, a hydride gas, a halogen gas, a halide gas, an oxide gas or a sulfide gas - or in the surrounding atmosphere.

The diamond semiconductor gas sensor of the present invention can therefore be used to detect or measure, for example, silane gas in hydrogen gas (carrier gas) employed in a semiconductor fabrication process or silane gas leaked into the atmosphere.

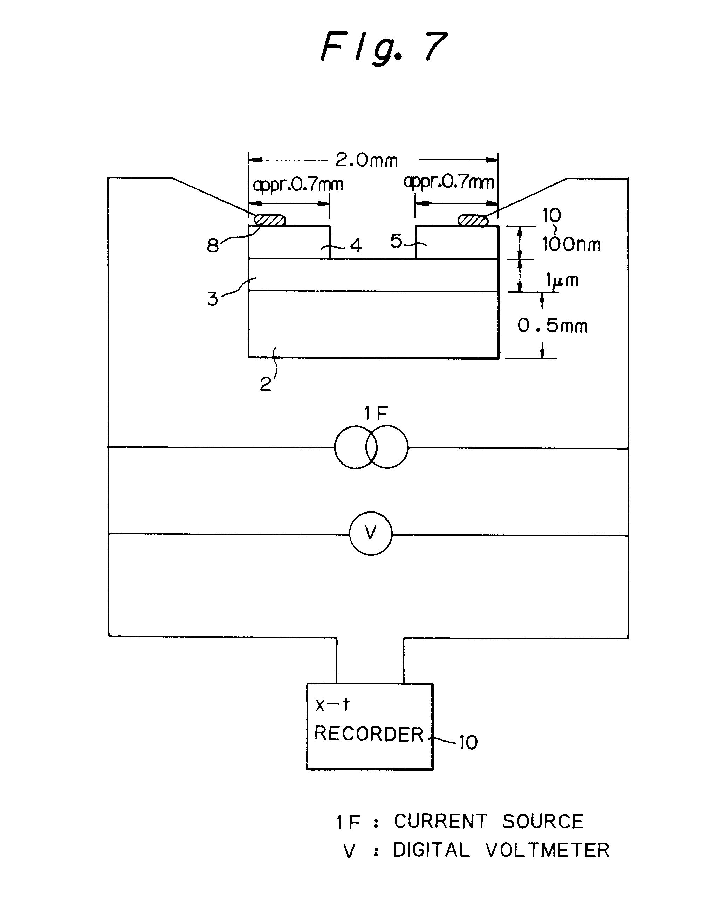

FIG. 7 shows, by way of example, a circuit of the measuring instrument to which a gas sensor fabricated as described above is connected to determine gas concentrations, in which numeral 8 indicates each wire bonding. In the exemplified measuring instrument, a constant current is caused to flow through the circuit by using a constant-current power supply 1F. A change in the resistance of the gas sensor, which takes place upon contact of the gas sensor with a gas, is recorded as a voltage change on a pen recorder 10 and the concentration of the gas is calculated based on the voltage change so recorded.

The present invention will hereinafter be described in further detail by the following examples.

Example 1

A B-doped diamond semiconductor layer was allowed to grow on the (100) plane of a 2 x 1.5 x 0.5 mm natural diamond as a substrate by the microwave plasma CVD process under the following conditions - gas concentrations: 2% methane, 98% hydrogen, and 100 ppm (by volume; this will apply equally herein) diborane, flow rate: 150 SCCM, pressure: 5.33 kPa, temperature: 900°C, and time: 8 hours. The thickness of the semiconductor layer was 1.6 $\mu$m. The diamond layer had epitaxially grown. According to an evaluation by the Raman microspectrophotometry, its half value width was 1.8 $cm^{-1}$ and hence narrower compared to 2.1 $cm^{-1}$ which was the half value width of the diamond substrate. The diamond layer therefore had high quality. Tungsten and gold were vacuum-evaporated on a surface of the diamond semiconductor layer by sputtering, whereby electrodes having an area of 100 $\mu m^2$ were formed, respectively, to provide a semiconductor sensor element. The interelectrode distance was 0.7 $\mu$m. A schematic illustration of the sensor element so obtained is shown in FIG. 1. A probe made of tungsten carbide was brought into contact with the electrodes, and electrical properties of the semiconductor sensor element were measured. Its resistivity was 0.008 $\Omega \cdot$m when measured at room temperature in an air atmosphere. The resistivity was 0.41 $\Omega \cdot$m when measured after the substrate had been heated to 400°C. After the resistance of the element had become sufficiently stable, diborane gas were added at 200 ppm to the air atmosphere, whereby the resistivity increased to 0.43 $\Omega \cdot$m. In that case, the 90% response time was 5 seconds. The sensor element was hence found to have sufficient practical utility as a detection element for diborane gas whose detection had heretofore been difficult.

Similar results were also obtained when titanium or aluminum was used as an electrode material.

Example 2

A diamond semiconductor layer obtained as in Example 1 was subjected to air plasma etching under the following conditions - air flow rate: 10 SCCM, microwave generation power: 150 W, pressure: 2.00 kPa, substrate temperature: 560°C, time: 15 minutes. Before the etching, surface areas where electrodes were to be provided were masked with silicon to avoid etching. Accordingly, a portion to be converted into a porous structure was etched. After the etched surface had been treated with hydrogen plasma at 150 W and 2.00 kPa, the surface so treated was subjected to microwave plasma CVD for 1 hour under similar conditions to those employed in Example 1 so that a B-doped diamond semiconductor layer was allowed to grow. The diamond semiconductor layer was subjected to air plasma etching under the same conditions as described above. As a result, the diamond surface became porous and contained a number of pits of about 1 $\mu$m. The diamond layer grew faster at the etched portion than the masked areas, whereby the diamond layer at the etched portion was about 0.2 $\mu$m thicker at the etched portion. The surface of the diamond layer was again treated by hydrogen plasma under similar conditions. Tungsten and gold were vacuum-evaporated in a similar manner to Example 1 to form electrodes, and the resistivity was then measured. The resistivity was 0.5 $\Omega \cdot$m when measured at 400°C in an air atmosphere. When diborane was fed at 200 ppm into the air atmosphere, the resistivity varied considerably and increased to 5 $\Omega \cdot$m. From those results, it has been found that the performance of a gas sensor can be significantly improved by providing a porous layer in an upper part of a diamond semiconductor layer. The sensor element of Example 2 is schematically illustrated in FIG. 2, in which numeral 7 indicates the porous diamond semiconductor layer.

Example 3

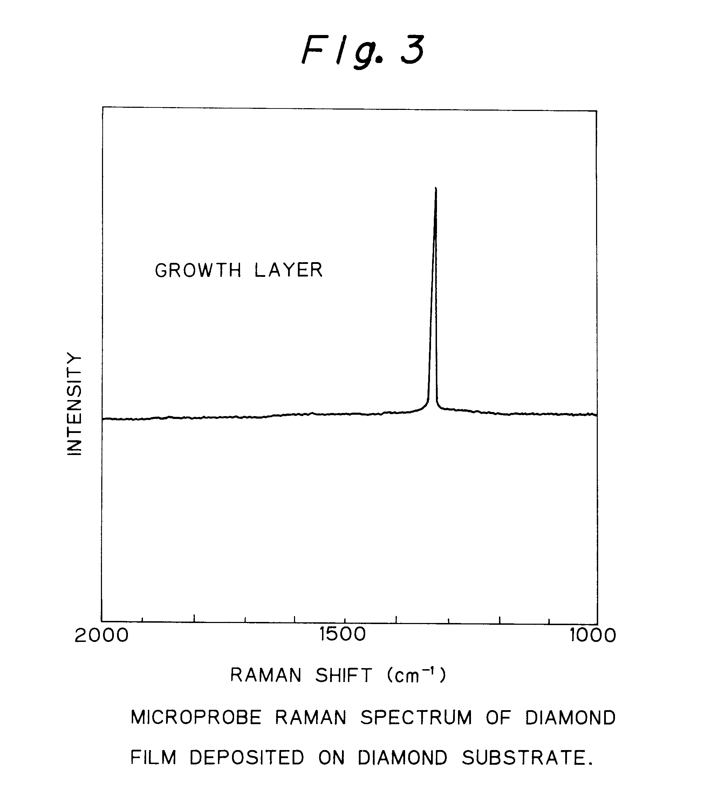

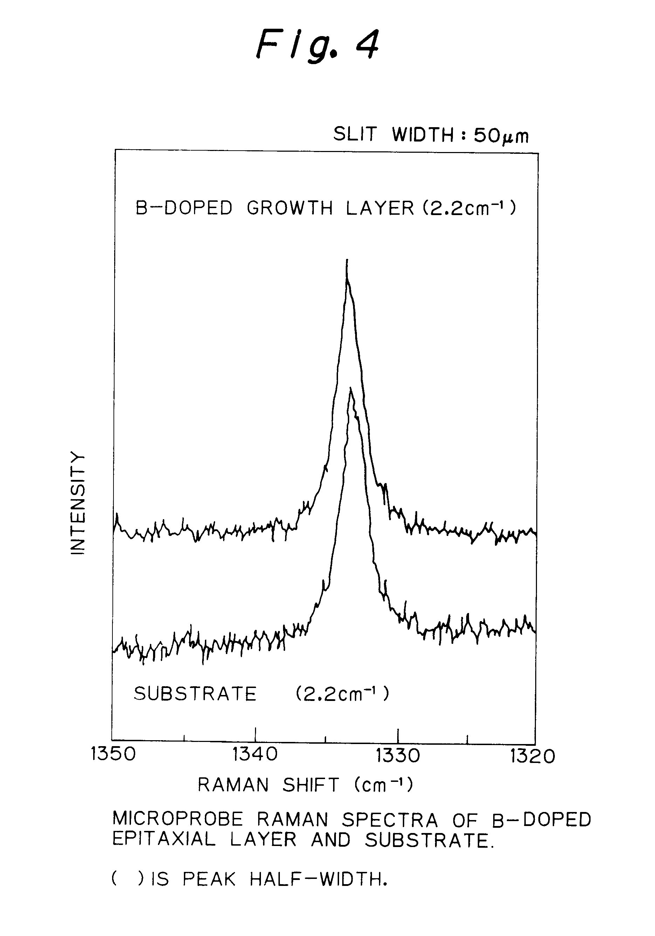

A B-doped diamond semiconductor layer was allowed to grow on the (100) plane of a 1.5 x 2.0 x 0.5 mm natural diamond (type IIa) as a substrate by the microwave plasma CVD process under the following conditions - gas concentrations: 6% methane, 94% hydrogen, and 100 ppm diborane, flow rate: 200 SCCM, pressure: 5.33 kPa, temperature: 900°C, and time: 1 hour The diamond layer had epitaxially grown with the same orientation as the substrate. The Raman spectrum of the diamond semiconductor so formed was analyzed using a Raman spectrometer (model: "NR-1100", resolution: 0.5 cm$^{-1}$; manufactured by Japan Spectroscopic Co., Ltd.). The results are shown in FIG. 3. It is only the peak of diamond at 1333 (cm$^{-1}$) that can be observed in FIG. 3. The peak of one-dimensionally and conjugately doublebonded carbon atoms at 1450-1550 (cm$^{-1}$), the peaks of cyclically double-bonded carbon atoms at 1600 and 1360 (cm$^{-1}$) and the peak of a polyene structure at 1150 (cm$^{-1}$), which will be called collectively "the peaks of double-bonded carbon substance", were not observed. Further, the half value width of the peak of diamond at 1333 (cm$^{-1}$) is shown in FIG. 4. The half value width of the epitaxially grown layer was 2.2 (cm$^{-1}$), which was the same as the half value width of the natural diamond (type IIa) used as the substrate. From those results, the resultant diamond was found to be a high-quality diamond which was substantially free of double-bonded carbon substance and had high purity. In addition, as a result of the measurement of an ultraviolet-near infrared absorption spectrum, the absorption spectrum of the diamond so obtained was found to be the same as the absorption spectrum of natural semiconductor diamond (type IIb) that the absorption of light increases at 500 nm and longer. It was hence confirmed that the resultant diamond had been doped with B and had been rendered semiconductive.

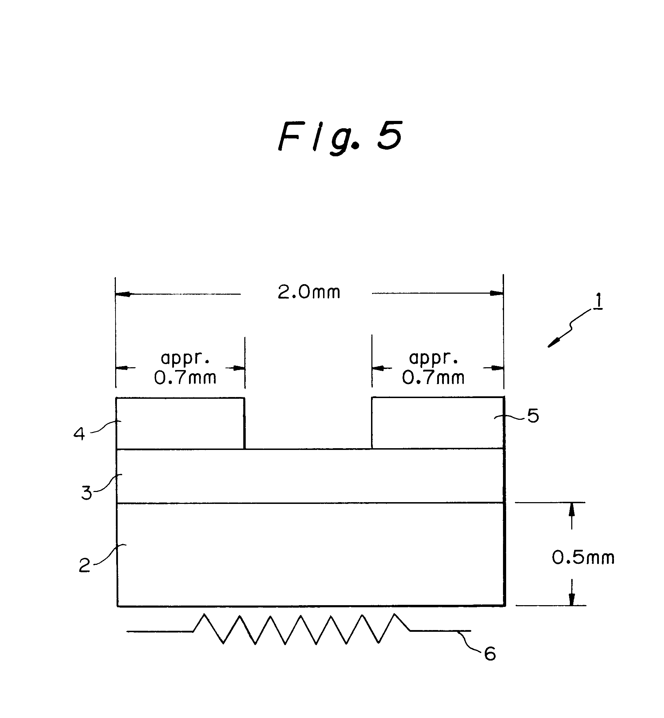

The diamond semiconductor layer was next treated by hydrogen plasma using microwave plasma CVD at 300 W and 5.33 kPa for 1 hour, whereby any graphite component on the surface of the epitaxially-grown diamond layer was removed to clean the surface. Attachment of electrodes was conducted in a sputtering apparatus which employing Pd as a target. The sputtering was conducted under the following conditions - vacuum level: 0.133 Pa, plasma output 10 mA, time: 10 minutes. A metal mask was used during the sputtering so that the electrodes were formed with a prescribed area. Using a wire bonding apparatus, 4-μm gold lead wires were connected to the electrodes, respectively. The characteristics of the resulting structure as a sensor were measured using a sensor characteristic evaluation apparatus. The structure of the sensor is schematically shown in FIG. 5, in which like reference numbers indicate like elements of structure in FIG. 1.

The resistance of the sensor at room temperature in the atmosphere was found to be 24.0 Ω as a result of a calculation based on a voltage by a constant-current power supply.

Characteristics of the sensor was next investigated using silane gas. Ra/Rb was 1.0203 at 1 ppm silane gas concentration and 100°C, in which Rb is the resistance of the sensor in air and Ra is the resistance of the sensor when silane is contained at a given concentration in air. As voltage, there was a change of 9.4 mV. Since the silane concentration at the time-weighted average limit (TWA) is 5 ppm, the sensor has been found to have the characteristic that it can detect concentrations lower than the permissible concentration. Further, the response characteristic of the sensor was sufficiently high, namely, the 90% response time was approximately 30 seconds at 100°C and about 18 seconds at 200°C. As a reliability confirmation test, detection of 5 ppm silane gas was repeatedly tested 3 times. The coefficient of variations was as small as 0.2%, thereby demonstrating high reliability. Further, with respect to hydrogen gas generally employed as a carrier gas in a semiconductor fabrication process, its interference to the sensor of this invention was investigated. The change in resistance for the hydrogen gas concentration of 5 ppm was about 1/47 compared to the change occurred in the case of 5 ppm of silane, so that hydrogen gas was found to give less interference to the sensor of this invention. As far as at least this embodiment is concerned, this means that hydrogen gas gives only nominal influence to the detection of silane gas or the influence is ignorably small.

From the above results, this sensor has been found to have sufficient practical utility. The above-described conditions, results and the like are summarized in Table 1.

Examples 4-5

Following the procedures of Example 3, sensors were fabricated under the conditions shown in Table 1. Their characteristics and reliability were investigated. The results are also shown in Table 1.

The resultant diamonds had all undergone epitaxial growth with the same orientation as the substrates.

They were semiconductor diamonds showing the same absorption spectrum as natural semiconductor diamond (IIb type). As a result of an analysis by the Raman spectroscopy, it was only the peak of diamond at 1333 (cm$^{-1}$) that was observed, and no impurities were observed.

In addition, the content of B was measured using secondary ion mass spectroscopy (SIMS) in Example 4. As a result, its content was found to be 0.3 ppm (molar ratio) in terms of B(boron)/C(diamond). Further, the thickness of the epitaxially-grown semiconductor diamond layer was measured by an ellipsometer. As a result, the thickness was found to be 40 nm. Furthermore, all the sensors had the ohmic characteristic.

As to the interference of hydrogen gas to the sensor, the variation in resistance of the sensor of Example 4 for 5 ppm hydrogen gas concentration was as small as about 1/120 compared to that for 5 ppm silane gas concentration. In the case of the sensor of Example 5, the variation in resistance even for 1% hydrogen gas concentration is as small as 1.0327 in terms of the Ra/Rb ratio. Hydrogen gas has therefore been found to rarely become an interference gas for both the sensors. From those results, sensors according to this invention have sufficient practical utility.

Example 6

A mica glass ceramic substrate (size: 1.5 x 2.0 x 0.5 mm) was scratched for 30 minutes by using diamond compounds (average particle size: 0.3 $\mu$m). After the substrate was washed four times, each for 30 minutes, with ultrapure water, the substrate was dried at 150°C for 1 hour. The surface of the substrate was observed using a differential interference microscope. As a result, the surface was found to be free of contamination. Following the procedures of Example 3, a sensor was then fabricated under the conditions shown in Table 1. Its characteristics, reliability and the like were investigated. The results are also shown in Table 1.

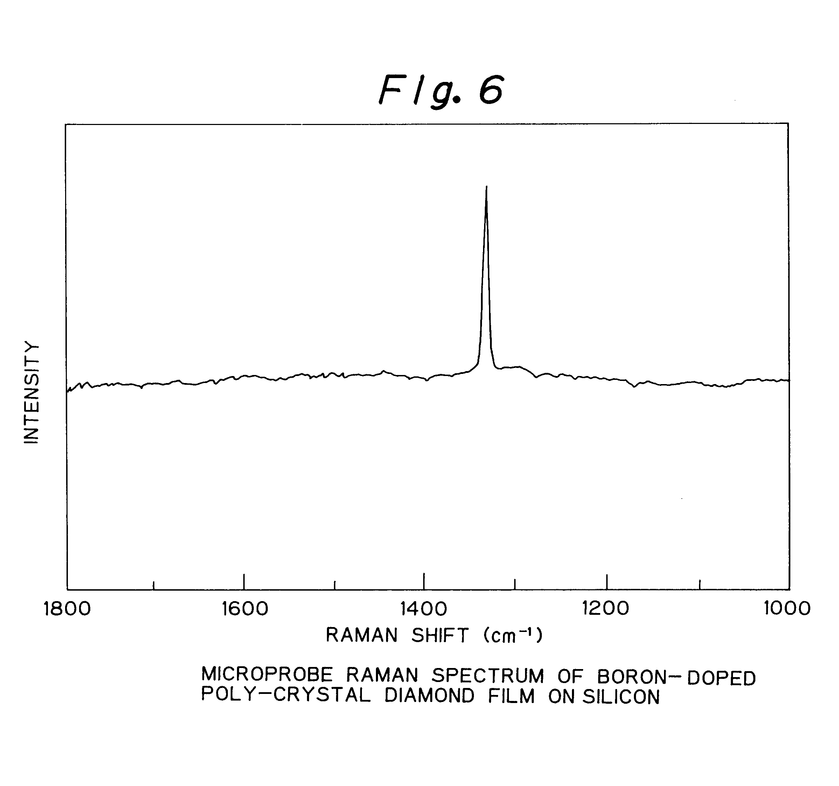

Polycrystalline diamond had grown to the thickness of about 0.5 $\mu$m on the substrate. The diamond semiconductor was analyzed by the Raman spectroscopy, As a result, it was only the peak of diamond at 1333 (cm$^{-1}$) that was observed, and no double bonded carbon substance was observed. The Raman spectrum of the resultant polycrystalline diamond is shown in FIG. 6. Further, the thickness of the Pd electrodes formed was measured by a quartz-oscillated film thickness mater. As a result, it was found to be about 50 nm. The sensor had the ohmic characteristic.

From these results, sensors using a polycrystalline diamond semiconductor have been found to have sufficient practical utility.

## Table 1

| | | | Example 3 | Example 4 | Example 5 | Example 6 |
|---|---|---|---|---|---|---|
| Substrate | Material | | Natural diamond (IIa) | Artificial diamond (Ib) | Monocrystalline natural diamond | Mica glass ceramic |
| | Growth surface for diamond semiconductor | | (100) plane | (110) plane | (111) plane | |
| | Dimensions (mm) | | 1.5 x 2.0 x 0.5 | 1.5 x 2.0 x 0.5 | 1.5 x 2.0 x 0.5 | 1.5 x 2.0 x 0.5 |
| Growth conditions for B-doped diamond semiconductor | Gas concentration | Methane (vol.%) | 6 | 0.5 | 0.5 | 4 |
| | | Hydrogen (vol.%) | 94 | 99.5 | 99.5 | 96 |
| | | Diborane (vol.ppm) | 100 | 3 | 20 | 20 |
| | Flow rate (SCCM) | | 200 | 100 | 200 | 200 |
| | Pressure (Pa) | | 5.33 | 4.93 | 5.33 | 5.33 |
| | Temperature (°C) | | 900 | 820 | 900 | 830 |
| | Time (hr) | | 1 | 5 | 1 | 1 |
| Formation conditions for electrodes | Target | | Pd | Pt-Pd (1:1) | Pt | Pd |
| | Vacuum level (Pa) | | 0.133 | 0.133 | 0.133 | 0.133 |
| | Plasma output (mA) | | 10 | 10 | 10 | 10 |
| | Treatment time (min) | | 10 | 10 | 15 | 5 |
| | Lead wires | | Au | Au | Au | Au |
| Resistance of sensor (Ω) (in the atmosphere, at room temperature) | | | 24.0 | 27.0 | 2000 | 1500 |
| Characteristics of sensor | Target gas (concentration, vol.ppm) | | Silane gas (1) | Silane gas (1) | Silane gas (1) | Diborane gas (1) / Hydrogen gas (5) |
| | Ra/Rb (temperature, °C) | | 1.0203 (100) | 1.0536 (100) | 1.0654 (100) / 1.0567 (200) | 1.03 (100) / 1.01 (100) |
| 90% response characteristic of sensor | (sec) (temp., °C) | | Silane gas / 30(100) / 18(200) | Silane gas / 57(room temp.) / 31(100) / 15(200) | Silane gas / 240 (room temp.) / 20(100) / 10(200) | Diborane gas / 15(100) / Hydrogen gas / 15(100) |
| Reliability of sensor | Target gas (concentration, vol.ppm) | | Silane gas (1) | Silane gas (1) | Diborane gas (1) | Diborane gas (1) |
| | Coefficient of variations (%) | | 0.2 | 0.2 | 0.1 | 0.1 |

## Claims

1. In a semiconductor gas sensor with a certain number of electrodes formed on a surface of a semiconductor, the improvement wherein said semiconductor is a diamond semiconductor.

2. The sensor of claim 1, wherein the diamond semiconductor is a thin diamond layer formed by vaporphase epitaxy.

3. The sensor of claim 1, wherein said diamond semiconductor is a monocrystalline or polycrystalline diamond semiconductor free of double-bonded carbon substance.

4. The sensor of claim 3, wherein said diamond semiconductor has been rendered free of double-bonded carbon substance by hydrogen plasma etching.

5. The sensor of claim 2, wherein said diamond semiconductor is a monocrystalline or polycrystalline diamond semiconductor free of double-bonded carbon substance.

6. The sensor of claim 5, wherein said diamond semiconductor has been rendered free of double-bonded carbon substance by hydrogen plasma etching.

7. The sensor of any one of claims 1-6, wherein said diamond semiconductor has a porous surface.

8. The sensor of claim 1 or 2, wherein said electrodes are made of a metal selected from a first metal group consisting of Pt, Pd, Ir, Ru, Eh, Re, Ag, Os and Au, an alloy of at least two metals selected from the first metal group or an alloy of at least one metal selected from the first metal group and at least one metal selected from a second metal group consisting of Cu, P, Co, Ni and Ce.

9. The sensor of claim 3 or 5, wherein said electrodes are made of a metal selected from a first metal group consisting of Pt, Pd, Ir, Ru, Rh, Re, Ag, Os and Au, an alloy of at least two metals selected from the first metal group or an alloy of at least one metal selected from the first metal group and at least one metal selected from a second metal group consisting of Cu, P, Co, Ni and Ce; and said sensor has an ohmic characteristic as an electrical characteristic.

# F l g. 1(a)

# F l g. 1(b)

# F l g. 2

# Fig. 3

MICROPROBE RAMAN SPECTRUM OF DIAMOND
FILM DEPOSITED ON DIAMOND SUBSTRATE.

# Fig. 4

SLIT WIDTH : 50μm

B-DOPED GROWTH LAYER (2.2cm$^{-1}$)

SUBSTRATE    (2.2cm$^{-1}$)

INTENSITY

RAMAN SHIFT (cm$^{-1}$)

1350    1340    1330    1320

MICROPROBE RAMAN SPECTRA OF B-DOPED
EPITAXIAL LAYER AND SUBSTRATE.

(  ) IS PEAK HALF-WIDTH.

# Fig. 5

Fig. 6

RAMAN SHIFT (cm⁻¹)

MICROPROBE RAMAN SPECTRUM OF BORON-DOPED
POLY-CRYSTAL DIAMOND FILM ON SILICON

INTENSITY

# *Fig. 7*

1F : CURRENT SOURCE

V : DIGITAL VOLTMETER